# EUROPEAN PATENT SPECIFICATION

(11) **EP 1 904 730 B1**
(45) Date of publication and mention of the grant of the patent: **10.12.2008**
(21) Application number: 05774626.5
(22) Date of filing: 19.07.2005
(51) Int. Cl.: F02C 6/12, F01D 5/14

(54) **VARIABLE NOZZLE TURBOCHARGER**
TURBOLADER MIT VARIABLER DÜSE
TURBOCOMPRESSEUR A BUSE VARIABLE

(43) Date of publication of application: 02.04.2008
(73) Proprietor: Honeywell International Inc., Morristown NJ 07960 (US)
(72) Inventor: RENAUD, Phillipe, Patent M/S-AB/2B Morristown NJ 07962-2245 (US); FAVRAY, Frederic, PO Box 22445, Morristown, NJ 07962-2245 (US); TISSERANT, Denis, PO Box 22445, Morristown NJ 07962-2245 (FR)
(74) Representative: Buckley, Guy Julian
(86) International application number: PCT/US2005/025426
(87) International publication number: WO 2007/011355

(56) References cited:
- US-A1- 2004 170 495
- PATENT ABSTRACTS OF JAPAN vol. 2003, no. 12, 5 December 2003 (2003-12-05) & JP 2004 286032 A (MINEBEA CO LTD), 14 October 2004 (2004-10-14)
- ARND WOLFRAM REICHERT: "Optimierte leitschaufeln fuer zentrilpetalturbinen" STROEMUNGSSIMULATIONEN ZUR OPTIMIERTEN GESTALTUNG VON TURBOMASCHINENKOMPONENTEN, 1995, pages 81-117, XP002242093

## Description

### FIELD OF THE INVENTION

This invention relates generally to the field of variable nozzle turbochargers and, more particularly, to an improved vane shape design for a plurality of pivoting vanes in a variable nozzle assembly of a turbocharger.

### BACKGROUND OF THE INVENTION

A variable nozzle turbocharger generally comprises a center housing having a turbine housing attached at one end, and a compressor housing attached at an opposite end. A shaft is rotatably disposed within a bearing assembly contained within the center housing. A turbine or turbine wheel is attached to one shaft end and is carried within the turbine housing, and a compressor impeller is attached to an opposite shaft end and is carried within the compressor housing.

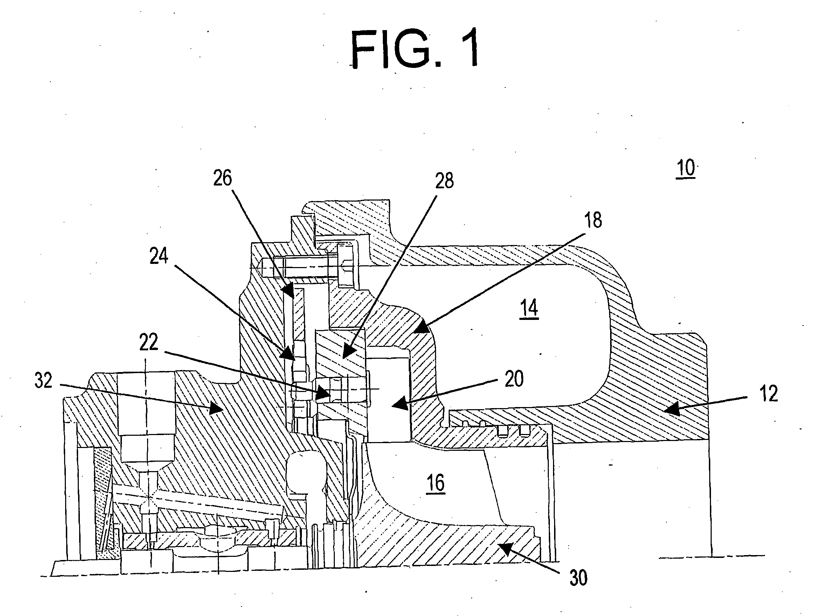

Fig. 1 illustrates a part of a known variable nozzle turbocharger 10 including the turbine housing 12 and the center housing 32. The turbine housing 12 has an exhaust gas inlet (not shown) for receiving an exhaust gas stream and an exhaust gas outlet 16 for directing exhaust gas to the exhaust system of the engine. A volute 14 connects the exhaust inlet and a nozzle which is defined between an insert 18 and a nozzle ring 28. The insert 18 forms an outer nozzle wall and is attached to the center housing 32 such that it is incorporated in the turbine housing 12 adjacent the volute 14. The nozzle ring 28 acts as an inner nozzle wall and is fitted into the insert 18. A turbine wheel 30 is carried within the exhaust gas outlet 16 of the turbine housing 12. Exhaust gas, or other high energy gas supplying the turbocharger 10, enters the turbine wheel 30 through the exhaust gas inlet and is distributed through the volute 14 in the turbine housing 12 for substantially radial entry into the turbine wheel 30 through the circumferential nozzle defined by the insert 18 and the nozzle ring 28.

A plurality of vanes 20 are mounted to the nozzle ring 28 using vane pins 22 that project perpendicularly outwardly from a mount on the vanes 20. Each vane pin 22 is attached to a vane arm 24, and the vane arms 24 are received in a rotatably mounted unison ring 28. An actuator assembly is connected with the unison ring 26 and is configured to rotate the unison ring 26 in one direction or the other as necessary to move the vanes 20 radially, with respect to an axis of rotation of the turbine wheel 30, outwardly or inwardly to respectively increase or decrease the pressure differential and to modify the flow of exhaust gas through the turbine wheel 30. As the unison ring 26 is rotated, the vane arms 24 are caused to move, and the movement of the vane arms 24 causes the vanes 20 to pivot via rotation of the vane pins 24 and open or close a throat area of the nozzle depending on the rotational direction of the unison ring 26.

An example of a known turbocharger employing such a variable nozzle assembly is disclosed in WO 2004/022926 A.

The vanes are generally designed having an airfoil shape that is configured to both provide a complementary fit with adjacent vanes when placed in a closed position, and to provide for the passage of exhaust gas within the turbine housing to the turbine wheel when placed in an open position. The shape of each vane is defined by a first surface defining a leading edge or nose having a first radius of curvature and a second surface defining a trailing edge or tail having a substantially smaller second radius of curvature. The first and second surfaces are connected by a third surface defining the airfoil shape on a radially outer side of the vane and a fourth surface defining the airfoil shape on a radially inner side of the vane. In this vane shape design, the third surface is convex in shape, while the fourth surface is convex in shape at the leading edge and concave in shape towards the trailing edge. The four vane surfaces complement each other to define a continuous cross-sectional curve. As used herein, the vane surfaces are characterized as "concave" or "convex" relative to the interior (not the exterior) of the vane. The asymmetric shape of such a vane results in a curved centerline, which is also commonly referred to as the camberline of the vane. The camberline is the line that runs through the midpoints between the vane inner and outer surfaces that connect the leading edge with the trailing edge of the vane. Its meaning is well understood by those skilled in the relevant technical field. Because this vane has a curved camberline, it is a "cambered" vane.

The use of such cambered vanes in variable nozzle turbochargers has resulted in some improvement in aerodynamic effects within the turbine housing. Some useful vane shape designs are disclosed in US 6,709,232 B1. These vane shape designs reduce unwanted aerodynamic effects within the turbine housing by maintaining a constant rate of exhaust gas acceleration as exhaust gas is passed thereover, thereby reducing unwanted backpressure within the turbine housing which is known to contribute to losses in turbocharger and turbocharged engine operating efficiencies.

Although the use of cambered vanes provides improvements in efficiency, it has been discovered that there is a risk to get a reversion of aerodynamic torque acting on the vane. In particular, it has been observed that there is usually a negative torque when the nozzle throat area between adjacent vanes is small and that there is a positive torque when the nozzle throat area is large. The torque is defined as positive when the flow of exhaust gas has enough force to urge the vanes into the open position. The aerodynamic torque reversion affects the functionality of the actuator assembly and the unison ring which cause the vanes to pivot. Having regard to operational controllability, it is preferable that the torque exercised on the vane is always in one direction, preferably positive and tending to open the nozzle (i.e. increase the throat area of the nozzle) regardless of the vane position. Further, it is preferable that the torque is made substantially constant to reduce torque hysteresis.

### SUMMARY OF THE INVENTION

It is, therefore, desirable that a variable nozzle turbocharger be provided with improved vane performance when compared to conventional turbochargers.

A common method of designing the shape of a vane for use in a variable nozzle assembly of a turbocharger comprises the following steps:
starting out from a proven vane shape;
making certain changes to the proven shape;
applying computational fluid dynamics (CFD) analysis for verifying the effect of the changes; and
if required, repeating the steps of making changes and applying CFD analysis until the desired vane performance is obtained.

It goes without saying that the above trial-and-error method is tedious and does not always achieve an optimal result.

The inventors approached the design problem differently by applying a method, which comprises the following steps:
defining a camberline curve of the vane by using a first Bézier curve which has at least six control points;
defining a thickness curve by using a second Bezier curve which has at least five control points;
setting the shape of the vane based on the camberline curve and the thickness curve; and
applying computational fluid dynamics analysis and a Design of Experiments (DOE) methodology for optimizing the setting of the control points to improve performance of the vane.

DOE is usually applied in quality engineering for understanding the variability in manufacturing factors on a manufacturing process or the performance of the product. What DOE offers is a methodical approach which can give the maximum amount of information while conducting the least number of experiments in order to understand these relationships.

The inventors applied the concept of DOE to the development of a new vane. Here, the critical point for the successful application of DOE was to identify the factors that influence the vane performance. In fact, it is the camber and the thickness of the vane that is most crucial. However, the problem was to express the camber and the thickness by a set of parameters which is manageable with DOE. Among the vast number of possibilities, the inventors chose to reproduce the shape of the vane by means of two Bezier curves, one for defining the camberline and the other for defining the thickness of the vane, and to use the control points of the Bezier curves as the factors to be optimized with DOE.

The minimum number of control points for the first and second Bézier curves are six and five, respectively. If the number of control points is less, it is not possible to reproduce a vane having an appropriate airfoil shape with sufficient flexibility. If the number of control points is more, the optimization process can be refined, but data interpretation becomes more difficult.

By applying the above design method, the inventors arrived at a vane having a distinct shape that is believed to be novel. This vane is defined by a first surface defining a leading edge, a second surface defining a trailing edge, a third surface connecting the first and second surfaces on a radially outer side of the vane, and a fourth surface connecting the first and second surfaces on a radially inner side of the vane, wherein the midpoints between the third surface and the fourth surface define a substantial part of the camberline of the vane, and wherein the thickness at a specific point of the vane is twice the distance between the specific point and the camberline in a direction perpendicular to a chord connecting the leading edge with the trailing edge.

The vane shape is distinct in that the camberline falls within the bounds of a virtual envelope defined by first Bézier curves, wherein each first Bézier curve has six control points Y1, Y2, Y3, Y4, Y5, Y6 which are set to be equally spaced over the length of the chord in ascending order towards the trailing edge, each control point, Y1, Y2, Y3, Y4, Y5, Y6 is shifted from the chord by a distance which is x-times the length, and x falls within the following ranges:
-0.1 ≤ x ≤ 0.1 for control point Y1,
-0.033 ≤ x ≤ -0.027 for control point Y2,
0.09 ≤ x ≤ 0.13 for control point Y3,
0.04 ≤ x ≤0.054 for control point Y4,
0.03 ≤ x ≤ 0.05 for control point Y5, and
-0.1 ≤ x ≤ 0.1 for control point Y6.

Furthermore, the vane shape is distinct in that the thickness of the vane is given at each specific point of said third surface or said fourth surface by a thickness curve that falls within the bounds of a virtual envelope defined by second Bézier curves, wherein each second Bézier curve has five control points T1, T2, T3, T4, T5 which are set to be equally spaced over the length of said chord in ascending order towards the trailing edge, each control point T1, T2, T3, T4, T5 is shifted from the chord by a distance which is y-times the length, and y falls within the following ranges:
0.03 ≤ y ≤ 0.09 for control point T1,
0.09 ≤ y ≤ 0.18 for control point T2,
0.02 ≤ y ≤ 0.05 for control point T3,
0.03 ≤ y ≤ 0.056 for control point T4, and
0 ≤ y ≤ 0.025 for control point T5.

If a plurality of vanes each having the above distinct shape is positioned annularly around a turbine wheel in a variable nozzle assembly of a turbocharger, a turbocharger with improved vane performance is obtained when compared to conventional turbochargers.

Vane performance can be further improved when x and y meet at least one of the following equations:
x ≤ 0.12, preferably x ≤ 0.11 for control point Y3,
x ≤ 0.04 for control point Y5,
y ≤ 0.7, preferably y ≤ 0.5 for control point T1, and
y ≤ 0.16, preferably y ≤ 0.13 for control point T2.

With regard to the first surface defining the leading edge and the second surface defining the trailing edge, it is preferable that each of the first surface and the second surface have the shape of a truncated ellipse.

As mentioned above, the third surface defining the radially outer side of the vane and the fourth surface defining the radially inner side of the vane define a substantial part of the camberline (that is, exclusive of the small part of the camberline defined by the first surface at the leading edge and the second surface at the trailing edge). The length of this substantial part of the camberline is preferably not less than 0.8 times, more preferably not less than 0.9 times the length of the chord which connects the leading edge with the trailing edge.

Further, each vane has a pivot point located at a position which preferably meets the following expressions:
0.25 < Mp < 0.45, more preferably 0.30 < Mp < 0.40, and
-0.10 < DYp < 0, more preferably -0.06 < DYp < -0.02,
wherein Mp is the distance between the pivot point and the leading edge in the direction of the chord divided by the length of the chord, and DYp is the distance between the pivot point and the chord in a direction perpendicular to the chord divided by the length of the chord, with negative values of DYp representing a pivot point which is more on the radially inner side of the vane.

Still further, the length of the chord is preferably 19.5 mm or less, more preferably 19.0 mm or less, most preferably 18.5 mm or less.

### BRIEF DESCRIPTION OF THE DRAWINGS

The invention will be more clearly understood with reference to the following drawings wherein:
Fig. 1 is a partial cross-sectional view of a turbocharger employing a variable nozzle assembly;
Fig. 2A is cross-sectional view of a vane according to a first embodiment of the invention, and Fig. 2B is a diagram showing a camberline curve and thickness curves of the vane;
Fig. 3A is cross-sectional view of a vane according to a second embodiment of the invention, and Fig. 3B is a diagram showing a camberline curve and thickness curves of the vane; and
Fig. 4A is cross-sectional view of a vane according to a comparative example, and Fig. 4B is a diagram showing a camberline curve and thickness curves of the vane.

### DETAILED DESCRIPTION OF THE INVENTION

The inventors used a Taguchi approach for analyzing variance to the vane shape design. Taguchi methods are often chosen when a mathematically simplistic approach to DOE is preferred.

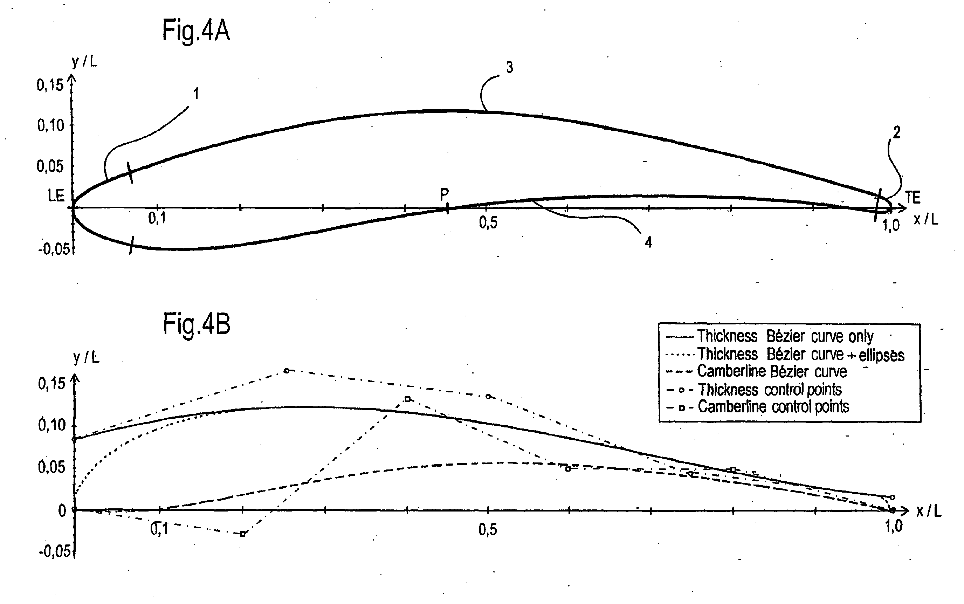

In detail, the inventors started out from a vane shape that had already been proven and tested to have a good performance. Fig. 4A is an cross-sectional view of this vane.

As shown in Fig. 4A, the shape of the vane is defined by four vane surfaces 1 to 4 which complement each other to define a continuous cross-sectional curve. A first surface 1 defines the leading edge or nose LE at one end of the vane, and a second surface 2 defines a trailing edge or tail TE located at an opposite end of the vane. The first surface 1 has a first radius of curvature at the leading edge LE which is larger than a second radius of curvature of the second surface 2 at the trailing edge TE. The first surface 1 and the second surface 2 are connected by a third surface 3 on a radially outer side of the vane and a fourth surface 4 on a radially inner side of the vane.

The vane of Fig. 4A has a length L of 19.98 mm, with the length L being defined as the length of a chord (straight line) that runs from the leading edge LE to the trailing edge TE. The surfaces on the radially outer side of the chord are substantially convex in shape, while the surfaces on the radially inner side of the chord define convex and concave-shaped sections.

The vane of Fig. 4A has a pivot point P at a position (Mp, DYp) = (0.453, 0), wherein Mp is the distance between the pivot point P and the leading edge LE in the direction of the chord divided by the length L, and DYp is the distance between the pivot point P and the chord in a direction perpendicular to the chord divided by the length of the chord, with negative values of DYp representing a pivot point which is more on the radially inner side of the vane. In other words, the pivot point P is located on the chord a bit closer towards the leading edge LE than towards the trailing edge TE.

The midpoints between the surfaces on the radially outer side of the chord and the surfaces on the radially inner side of the chord define the camberline of the vane. The approximate run of the camberline curve is shown in Fig. 4B as a dashed line.

For defining the shape of the camberline, the coordinate system shown in Fig. 4A is used. The origin of this coordinate system is the leading edge LE. The x-axis coincides with the chord, which defines the vane length L and runs from the leading edge LE to the trailing edge TE. The y-axis is normal to the x-axis and runs to the radially outer side of the vane. The units of the x-axis and y-axis are scaled to the length L.

As illustrated in Fig. 4B, the camberline curve has an S-shape and runs for the first 15% of the length L in the immediate vicinity of chord and for the rest of the length L on the radially outer side of the chord.

The inventors reproduced the camberline of the vane shown in Fig. 4A by using a first Bezier curve. As illustrated in Fig. 4B, the first Bezier curve (dashed line called "Camberline Bezier curve") had six control points Y1, Y2, Y3, Y4, Y5, Y6 which were set to be equally spaced over the length L in ascending order towards the trailing edge TE.

Then, the inventors made the attempt to reproduce the thickness curve of the vane, which is obtained by plotting the actual thickness Th at each specific point of the vane over the length L. As illustrated in Fig. 4B, the inventors approximated the thickness curve by means of a second Bezier curve (solid line called "Thickness Bezier curve only"). The second Bezier curve had five control points T1, T2, T3, T4, T5 which were set to be equally spaced over the length L in ascending order towards the trailing edge TE.

Fig. 4B clearly shows that the second Bezier curve deviates from the actual thickness Th in the vicinity of the leading edge LE and the trailing edge TE. The inventors compensated for the deviation from the actual thickness Th by fitting thickness curves (dotted line called "Thickness Bezier curve + ellipses") of first and second truncated ellipses to the second Bezier curve at about 23% and 98% of the length L, respectively. The first ellipse had an aspect ratio of 4 and reproduced the vane surface 1 at the leading edge LE, and the second ellipse had an aspect ratio of 2 and reproduced the vane surface 2 at the leading edge LE. The remaining vane surfaces 3 and 4, which were reproduced by the second Bezier curve only, occupied about 75% of the length L.

After they had reproduced the shape of the vane shown in Fig. 4A by means of the Bezier curves shown in Fig. 4B, the inventors varied the chord length L and shifted the control points of the first and second Bezier curves in a direction perpendicular to the chord to create variance in vane shape design. The variation ranges are shown in the following Table 1. In Table 1, the lower limit LL and the upper limit UL of the ranges are given as a fraction of the length L. Negative values for the control points Y1, Y2, Y6 indicate that the control points were shifted to a position on the radially inner side of the chord. It should be noted that the inventors maximized the part of the vane defined by the third and fourth vane surfaces 3, 4 by reducing the total length of the ellipses used for reproducing the vane surfaces 1, 2 at the leading edge LE and the trailing edge TE to less than 20% of the vane length L, or even less than 10% where appropriate.

**Table 1**

| | Y1 | Y2 | Y3 | Y4 | Y5 | Y6 | T1 | T2 | T3 | T4 | T5 |
|---|---|---|---|---|---|---|---|---|---|---|---|
| LL | -0.1 | -0.033 | 0.11 | 0.04 | 0.035 | -0.1 | 0.06 | 0.11 | 0.095 | 0.03 | 0 |
| UL | 0.1 | -0.027 | 0.15 | 0.054 | 0.07 | 0.1 | 0.12 | 0.21 | 0.18 | 0.056 | 0.025 |

Then, a Taguchi cycle was performed as a first DOE cycle to identify those changes which influence turbocharger efficiency most. For this purpose, there was carried out a computational fluid dynamics (CFD) analysis for each selected vane shape design. The vane shape designs were analyzed on a variable nozzle assembly as shown in Fig. 1 and for two different throat areas of 1 mm and 3 mm in a throat area range of 0 mm to 6 mm.

The Taguchi cycle revealed that turbocharger efficiency could be increased by reducing the length L.. This effect saturated at a length L of 18.5 mm. Furthermore, the first Taguchi cycle revealed that the control points, Y3, Y5, T1, T2 and T4 have the most impact on efficiency.

In a second DOE cycle, the length of the vane shape designs was set to 18.5 mm and the positions of the control points Y3, Y5, T1, T2, T4 were refined within the variation ranges shown in the following Table 2. Again, the lower limit LL and the upper limit UL of the ranges are given as a fraction of the length L.

**Table 2**

| | Y3 | Y5 | T1 | T2 | T3 |
|---|---|---|---|---|---|
| LL | 0.09 | 0.03 | 0.03 | 0.09 | 0.02 |
| UL | 0.13 | 0.05 | 0.09 | 0.18 | 0.05 |

In addition, the effect of varying the location of the pivot point P on the vane operational controllability was analyzed by shifting Mp between 0.25 and 0.50 and DYp between -0.050 and 0.050.

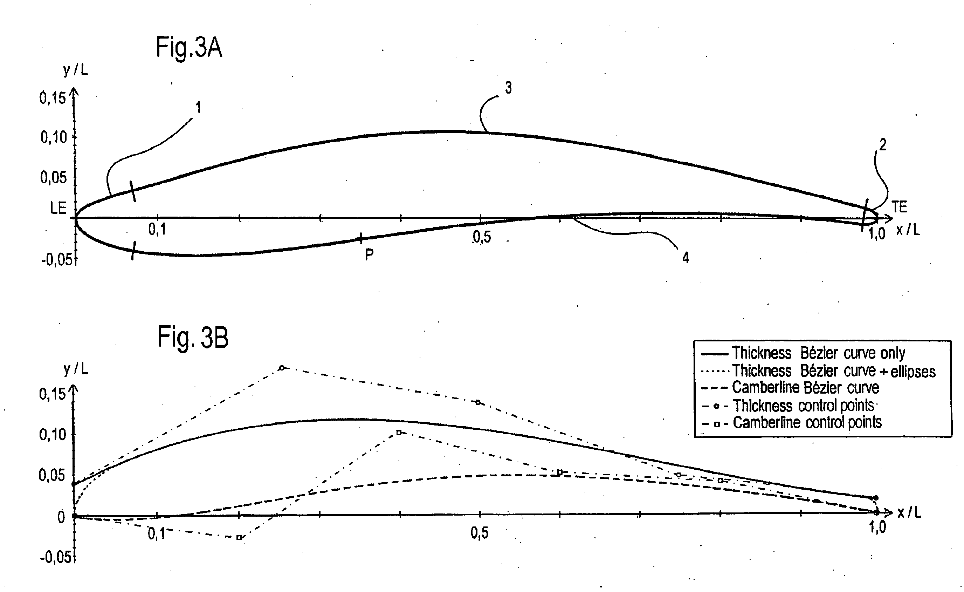

As a result, the vane shape design shown in Figs. 3A and 3B was obtained. Due to an adequate choice of the chord length L, the control points Y1 to Y6 and T1 to T5, and the pivot point P, the torque acting on the vane was shifted to higher positive values to reduce torque hysteresis, while keeping efficiency at the maximum in the chosen range of parameters.

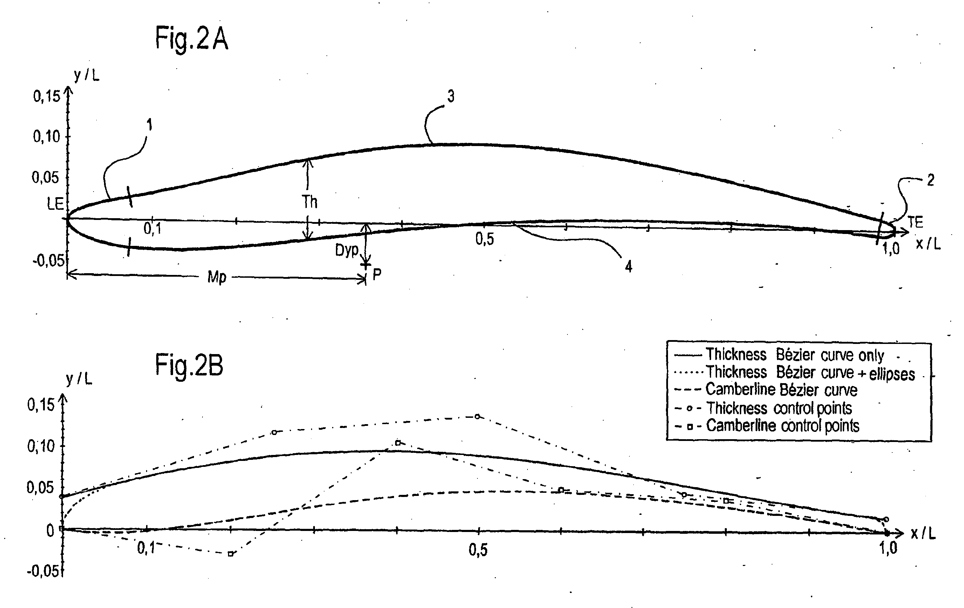

Finally, a third DOE cycle was performed in order to further improve the operational controllability of the vane. As a result, the vane shaped design shown in Figs. 2A and 2B was obtained. As compared with the vane shape design shown in Figs. 3A and 3B, the torque hysteresis was reduced for additional 30%.

Further specifics on the vane shape designs shown in Fig. 2 (first embodiment), Fig. 3 (second embodiment) and Fig. 4 (comparative example) are given in the following Table 3.

**Table 3**

| | Fig. 2. | Fig. 3 | Fig. 4 |
|---|---|---|---|
| L (mm) | 18.5 | 18.5 | 19.98 |
| Mp | 0.3577 | 0.35 | 0.453 |
| DYp | -0.05 | -0.025 | 0 |
| Y1 | 0 | 0 | 0 |
| Y2 | -0.02973 | -0.02973 | -0.02973 |
| Y3 | 0.1062 | 0.1062 | 0.131 |
| Y4 | 0.049 | 0.049 | 0.049 |
| Y5 | 0.04 | 0.04 | 0.051 |
| Y6 | 0 | 0 | 0 |
| T1 | 0.04 | 0.04 | 0.864 |
| T2 | 0.116 | 0.18 | 0.1641 |
| T3 | 0.1378 | 0.1378 | 0.1378 |
| T4 | 0.045 | 0.045 | 0.04307 |
| T5 | 0.0178 | 0.0178 | 0.0178 |

For all of the vane shape designs given in Table 3, an ellipse having an aspect ratio of 4 was used for defining the vane surface 1 at the leading edge LE and an ellipse having an aspect ratio of 2 was used for defining the vane surface 2 at the trailing edge TE. The remaining surfaces 3, 4 occupied 75.45% (between 22.8 and 98.2%) of the length L in case of Fig. 4, 90.74% (between 7.51 and 98.2%) of the length L in case of Fig. 3, and 91.36% (between 6.89 and 98.2%) of the length L in case of Fig. 2.

A confirmation experiment was carried out with samples of the first embodiment and the comparative example. These samples had different heights of 8.5 mm and 7.5 mm in the axial direction of the vane pin. For both heights, a hysteresis reduction of 70% was conformed for the samples of the first embodiment.

A comparison between the vane shape designs of the first embodiment and the comparative example reveals that the first embodiment has a smaller length L, a smaller cross-sectional area, a nose which is quite flat over 20% of the chord length L, a pivot point P which is displaced to the radially inner side of the vane, and a mass center which is close to the pivot point.

Although the first embodiment is preferable over the second embodiment and the second embodiment is preferable over other vane shape designs used in the second DOE cycle, the invention is not limited to the first and second embodiment. It is to be understood that all vane shape designs falling within the terms of the claims can be used in a variable nozzle assembly of a turbocharger to improve performance.

## Claims

1. A turbocharger with a variable nozzle assembly having a plurality of vanes (20) positioned annularly around a turbine wheel, wherein
the shape of each vane (20) is defined by a first surface (1) defining a leading edge (LE), a second surface (2) defining a trailing edge (TE), a third surface (3) connecting the first and second surfaces on a radially outer side of the vane, and a fourth surface (4) connecting the first and second surfaces on a radially inner side of the vane,
the midpoints between the third surface (3) and the fourth surface (4) define a substantial part of the camberline of the vane, and
the thickness at a specific point of the vane is twice the distance between the specific point and the camberline in a direction perpendicular to a chord connecting the leading edge (LE) with the trailing edge (TE),
**characterized in that**
said camberline falls within the bounds of a virtual envelope defined by first Bézier curves, wherein each first Bézier curve has six control points Y1, Y2, Y3, Y4, Y5, Y6 which are set to be equally spaced over the length (L) of said chord in ascending order towards the trailing edge (TE), each control point Y1, Y2, Y3, Y4, Y5, Y6 is shifted from the chord by a distance which is x-times the length (L), and x falls within the following ranges:
-0.1 < x 5 0.1 for control point Y1,
-0.033 ≤ x ≤ -0.027 for control point Y2,
0.09 ≤ x ≤ 0.13 for control point Y3,
0.09 ≤ x ≤ 0.054 for control point Y4,
0.03 ≤ x ≤ 0.05 for control point Y5, and
-0.1 ≤ x ≤ 0.1 for control point Y6; ,
and
the thickness (Th) of the vane is given at each specific point of said third surface (3) or said fourth surface (4) by a thickness curve that falls within the bounds of a virtual envelope defined by second Bézier curves, wherein each second Bézier curve has five control points T1, T2, T3, T4, T5 which are set to be equally spaced over the length (L) of said chord in ascending order towards the trailing edge (TE), each control point T1, T2, T3, T4, T5 is shifted from the chord by a distance which is y-times the length (L), and y falls within the following ranges:
0.03 ≤ y ≤ 0.09 for control point T1,
0.09 ≤ y ≤ 0.18 for control point T2,
0.02 ≤ y ≤ 0.05 for control point T3,
0.03 ≤ y ≤ 0.056 for control point T4, and
0 ≤ y ≤ 0.025 for control point T5.

2. A turbocharger according to claim 1, wherein x and y meet at least one of the following equations:
x ≤ 0.12, preferably x ≤ 0.11 for control point Y3,
x ≤ 0.04 for control point Y5,
y ≤ 0.7, preferably y ≤ 0.5 for control point T1, and
y ≤ 0.16, preferably y ≤ 0.13 for control point T2.

3. A turbocharger according to claim 1, wherein each of the first surface and the second surface has the shape of a truncated ellipse.

4. A turbocharger according to claim 1, wherein the length of said third surface (3) or said fourth surface (4) is not less than 0.8 times, preferably 0.9 times the length (L) of the chord.

5. A turbocharger according to claim 1, wherein each vane is pivotable around a pivot point (P), said pivot point (P) being located at a position which meets the following expressions:
0.25 < Mp < 0.45, preferably 0.30 < Mp < 0.40, and
-0.10 < DYp < 0, preferably -0.06 < DYp < -0.02,
wherein Mp is the distance between the pivot point and the leading edge in the direction of the chord divided by the length of the chord, and DYp is the distance between the pivot point and the chord in a direction perpendicular to the chord divided by the length of the chord, with negative values of DYp representing a pivot point which is more on the radially inner side of the vane.

6. A turbocharger according to claim 1, wherein the length (L) of said chord 19.5 mm or less, preferably 19.0 mm or less, more preferably 18.5 mm or less.

7. A method of designing the shape of a vane (20) for use in a variable nozzle assembly of a turbocharger, said method comprising the following steps:
defining a camberline curve of the vane by using a first Bézier curve which has at least six control points;
defining a thickness curve by using a second Bézier curve which has at least five control points;
setting the shape of the vane based on the camberline curve and the thickness curve; and
applying computational fluid dynamics analysis and a Design of Experiments methodology for optimizing the setting of the control points to improve performance of the vane.

## Patentansprüche

1. Turbolader mit einer variablen Düsenanordnung, die mehrere Leitschaufeln (20) aufweist, welche ringförmig um ein Turbinenrand positioniert sind, wobei
die Form jeder Leitschaufel (20) durch eine erste Fläche (1), die eine Eintrittskante (LE) definiert, eine zweite Fläche (2), die eine Austrittskante (TE) definiert, eine dritte Fläche (3), die die erste und die zweite Fläche an einer radial äußeren Seite der Leitschaufel verbindet, und eine vierte Fläche (4), die die erste und die zweite Fläche an einer radial inneren Seite der Leitschaufel verbindet, definiert wird,
die Mittelpunkte zwischen der dritten Fläche (3) und der vierten Fläche (4) einen wesentlichen Teil der Skelettlinie der Leitschaufel definieren, und
die Dicke an einem bestimmten Punkt der Leitschaufel das Doppelte des Abstands zwischen dem bestimmten Punkt und der Skelettlinie in einer senkrecht zu einer die Eintrittskante (LE) mit der Austrittskante (TE) verbindenden Sehne beträgt,
**dadurch gekennzeichnet, dass**
die Skelettlinie innerhalb der Grenzen einer gedachten Hüllkurve fällt, die durch erste Bezier-Kurven gebildet wird, wobei jede erste Bezier-Kurve sechs Kontrollpunkte Y1, Y2, Y3, Y4, Y5, Y6 aufweist, die so angeordnet sind, dass sie gleichmäßig über die Länge (L) der Sehne in aufsteigender Reihenfolge zur Austrittskante (TE) beabstandet sind, wobei jeder Kontrollpunkt Y1, Y2, Y3, Y4, Y5, Y61 um eine Strecke von der Sehne versetzt ist, die das x-Fache der Länge (L) beträgt, und x innerhalb der folgenden Bereiche fällt:
-0,1 ≤ x ≤ 0,1 für Kontrollpunkt Y1,
-0,033 ≤ x ≤ -0,027 für Kontrollpunkt Y2,
0,09 ≤ x ≤ 0,13 für Kontrollpunkt Y3,
0,04 ≤ x ≤ 0,054 für Kontrollpunkt Y4,
0,03 ≤ x ≤ 0,05 für Kontrollpunkt Y5 und
-0,1 ≤ x ≤ 0,1 für Kontrollpunkt Y6
und
die Dicke (Th) der Leitschaufel an jedem bestimmten Punkt der dritten Fläche (3) oder der vierten Fläche (4) durch eine Dickenkurve gegeben wird, die innerhalb der Grenzen einer durch die zweiten Bézier-Kurven definierten gedachten Hüllkurve fällt, wobei jede zweite Bezier-Kurve fünf Kontrollpunkte T1, T2, T3, T4, T5 aufweist, die so angeordnet sind, dass sie gleichmäßig über die Länge (L) der Sehne in aufsteigender Reihenfolge zur Austrittskante (TE) beabstandet sind, wobei jeder Kontrollpunkt T1, T2, T3, T4, T5 um eine Strecke von der Sehne versetzt ist, die das y-Fache der Länge (L) beträgt, und y innerhalb der folgenden Bereiche fällt:
0,03 ≤ y ≤ 0,09 für Kontrollpunkt T1,
0,09 ≤ y ≤ 0,18 für Kontrollpunkt T2,
0,02 ≤ y ≤ 0,05 für Kontrollpunkt T3,
0,03 ≤ y ≤ 0,056 für Kontrollpunkt T4 und
0 ≤ y ≤ 0,025 für Kontrollpunkt T5.

2. Turbolader nach Anspruch 1, wobei x und y zumindest eine der folgenden Gleichungen erfüllen:
x ≤ 0,12, vorzugsweise x ≤ 0,11 für Kontrollpunkt Y3,
x ≤ 0,04 für Kontrollpunkt Y5,
y ≤ 0,7, vorzugsweise y ≤ 0,5, für Kontrollpunkt T1 und
y ≤ 0,16, vorzugsweise ≤ 0,13, für Kontrollpunkt T2.

3. Turbolader nach Anspruch 1, wobei sowohl die erste Fläche als auch die zweite Fläche die Form eines Ellipsenstumpfes aufweisen.

4. Turbolader nach Anspruch 1, wobei die Länge der dritten Fläche (3) oder der vierten Fläche (4) nicht weniger als das 0,8-Fache, vorzugsweise das 0,9-Fache, der Länge (L) der Sehne beträgt.

5. Turbolader nach Anspruch 1, wobei jede Leitschaufel um einen Drehpunkt (P) schwenkbar ist, wobei der Drehpunkt (P) an einer Stelle angeordnet ist, die die folgenden Ausdrücke erfüllt:
0,25 < Mp < 0,45, vorzugsweise 0,30 < Mp < 0,40, und
- 0,10 < DYp < 0, vorzugsweise -0,06 < DYp < -0,02,
wobei Mp der Abstand zwischen dem Drehpunkt und der Eintrittskante in Richtung der Sehne geteilt durch die Länge der Sehne ist und DYp der Abstand zwischen dem Drehpunkt und der Sehne in einer senkrecht zur Sehne verlaufenden Richtung geteilt durch die Länge der Sehne ist, wobei negative Werte von DYp einen Drehpunkt darstellen, der mehr auf der radial inneren Seite der Leitschaufel liegt.

6. Turbolader nach Anspruch 1, wobei die Länge (L) der Sehne 19,5 mm oder weniger, vorzugsweise 19,0 mm oder weniger, besonders bevorzugt 18,5 oder weniger, beträgt.

7. Verfahren zur Konstruktion der Form einer Leitschaufel (20) zur Verwendung bei einer variablen Düsenanordnung eines Turboladers, wobei das Verfahren die folgenden Schritte umfasst:
Definieren einer Skelettlinienkurve der Leitschaufel durch Verwendung einer ersten Bezier-Kurve, die mindestens sechs Kontrollpunkte aufweist;
Definieren einer Dickenkurve durch Verwendung einer zweiten Bézier-Kurve, die mindestens fünf Kontrollpunkte aufweist;
Ausbilden der Form der Leitschaufel auf Grundlage der Skelettlinie und der Dickenkurve; und
Anwenden von numerischer Strömungsdynamikanalyse und einer statischen Versuchsplanungsmethodologie zur Optimierung der Anordnung der Kontrollpunkte zur Verbesserung der Leistung der Leitschaufel.

## Revendications

1. Turbocompresseur muni d'un ensemble de tuyère variable doté d'une pluralité d'ailettes (20) positionnées de façon annulaire autour d'une roue de turbine,
la forme de chaque ailette (20) étant définie par une première surface (1) définissant un bord d'attaque (LE), une deuxième surface (2) définissant un bord de fuite (TE), une troisième surface (3) reliant les première et deuxième surfaces d'un côté radialement extérieur de l'ailette et une quatrième surface (4) reliant les première et deuxième surfaces d'un côté radialement intérieur de l'ailette,
les points équidistants de la troisième surface (3) et de la quatrième surface (4) définissant une partie substantielle du squelette de l'ailette, et
l'épaisseur de l'ailette en un point particulier valant deux fois la distance entre le point considéré et le squelette dans une direction perpendiculaire à une corde reliant le bord d'attaque (LE) au bord de fuite (TE),
**caractérisé en ce que**
ledit squelette se situe dans les limites d'une enveloppe virtuelle définie par des premières courbes de Bézier, chacune des premières courbes de Bézier présentant six points de contrôle Y1, Y2, Y3, Y4, Y5, Y6 placés de façon à être espacés régulièrement sur la longueur (L) de ladite corde par ordre croissant en direction du bord de fuite (TE), chacun des points de contrôle Y1, Y2, Y3, Y4, Y5, Y6 étant décalé par rapport à la corde d'une distance valant x fois la longueur (L) et x se situant dans les intervalles suivants :
-0,1 ≤ x ≤ 0,1 pour le point de contrôle Y1,
-0,033 ≤ x ≤ -0,027 pour le point de contrôle Y2,
0,09 ≤ x ≤ 0,13 pour le point de contrôle Y3,
0,04 ≤ x ≤ 0,054 pour le point de contrôle Y4,
0,03 ≤ x ≤ 0,05 pour le point de contrôle Y5, et
-0,1 ≤ x ≤ 0,1 pour le point de contrôle Y6 ;
et
l'épaisseur (Th) de l'ailette étant donnée en chaque point particulier de ladite troisième surface (3) ou de ladite quatrième surface (4) par une courbe d'épaisseur qui se situe dans les limites d'une enveloppe virtuelle définie par des deuxièmes courbes de Bézier, chacune des deuxièmes courbes de Bézier présentant cinq points de contrôle T1, T2, T3, T4, T5 placés de façon à être espacés régulièrement sur la longueur (L) de ladite corde par ordre croissant en direction du bord de fuite (TE), chacun des points de contrôle T1, T2, T3, T4, T5 étant décalé par rapport à la corde d'une distance valant y fois la longueur (L) et y se situant dans les intervalles suivants :
0,03 ≤ y ≤ 0,09 pour le point de contrôle T1,
0,09 ≤ y ≤ 0,18 pour le point de contrôle T2,
0,02 ≤ y ≤ 0,05 pour le point de contrôle T3,
0,03 ≤ y ≤ 0,056 pour le point de contrôle T4, et
0 ≤ y ≤ 0,025 pour le point de contrôle T5.

2. Turbocompresseur selon la revendication 1, x et y satisfaisant au moins une des relations suivantes :
x ≤ 0,12, de préférence x ≤ 0,11 pour le point de contrôle Y3,
x ≤ 0,04 pour le point de contrôle Y5,
y ≤ 0,7, de préférence y ≤ 0,5 pour le point de contrôle T1, et
y ≤ 0,16, de préférence y ≤ 0,13 pour le point de contrôle T2.

3. Turbocompresseur selon la revendication 1, chacune des première et deuxième surfaces présentant la forme d'une ellipse tronquée.

4. Turbocompresseur selon la revendication 1, la longueur de ladite troisième surface (3) ou de ladite quatrième surface (4) n'étant pas inférieure à 0,8 fois, de préférence 0,9 fois la longueur (L) de la corde.

5. Turbocompresseur selon la revendication 1, chaque ailette pouvant pivoter autour d'un point (P) de pivot, ledit point (P) de pivot étant situé à une position satisfaisant les relations suivantes :
0,25 < Mp < 0,45, de préférence 0,30 < Mp < 0,40, et
-0,10 < DYp < 0, de préférence -0,06 < DYp < -0,02,
Mp étant la distance entre le point de pivot et le bord d'attaque dans la direction de la corde divisée par la longueur de la corde et DYp étant la distance entre le point de pivot et la corde dans une direction perpendiculaire à la corde divisée par la longueur de la corde, les valeurs négatives de DYp représentant un point de pivot situé davantage du côté radialement intérieur de l'ailette.

6. Turbocompresseur selon la revendication 1, la longueur (L) de ladite corde valant 19,5 mm ou moins, de préférence 19,0 mm ou moins, de façon plus préférable 18,5 mm ou moins.

7. Procédé de conception du profil d'une ailette (20) destinée à être utilisée dans un ensemble de tuyère variable de turbocompresseur, ledit procédé comportant les étapes suivantes :
définir une courbe de squelette de l'ailette à l'aide d'une première courbe de Bézier présentant au moins six points de contrôle ;
définir une courbe d'épaisseur à l'aide d'une deuxième courbe de Bézier présentant au moins cinq points de contrôle ;
fixer le profil de l'ailette sur la base de la courbe de squelette et de la courbe d'épaisseur ; et
appliquer une analyse de mécanique des fluides numérique et une méthodologie de plans d'expériences en vue d'optimiser le placement des points de contrôle pour améliorer les performances de l'ailette.
